# EUROPEAN PATENT SPECIFICATION

(11) **EP 3 575 905 B1**
(45) Date of publication and mention of the grant of the patent: **15.01.2025**
(21) Application number: 18744022.7
(22) Date of filing: 29.01.2018
(51) Int. Cl.: G05B 19/05, G05B 9/03

(54) **SAFETY SYSTEM AND SAFETY CONTROLLER**
SICHERHEITSSYSTEM UND SICHERHEITSSTEUERGERÄT
SYSTÈME DE SÉCURITÉ ET CONTRÔLEUR DE SÉCURITÉ

(30) Priority: 30.01.2017 JP 2017014247
(43) Date of publication of application: 04.12.2019
(73) Proprietor: Omron Corporation, Kyoto-shi, Kyoto 600-8530 (JP)
(72) Inventor: UEDA, Takamasa, Kyoto-shi, Kyoto 600-8530 (JP); MUNETA, Yasuo, Kyoto-shi, Kyoto 600-8530 (JP); HIOKA, Takehiko, Kyoto-shi, Kyoto 600-8530 (JP)
(74) Representative: Horn Kleimann Waitzhofer Schmid-Dreyer Patent- und Rechtsanwälte PartG mbB
(86) International application number: PCT/JP2018/002641
(87) International publication number: WO 2018/139627

(56) References cited:
- EP-A2- 1 744 230
- WO-A1-2014/013554
- JP-A- 2000 341 357
- JP-A- 2002 278 607
- US-A1- 2015 073 599
- SMITH S E ED - PIEPER JEFF: "TRIPLE REDUNDANT FAULT TOLERANCE: A HARDWARE-IMPLEMENTED APPROACH", ISA TRANSACTIONS, INSTRUMENT SOCIETY OF AMERICA. PITTSBURGH, US, vol. 30, no. 4, 1 January 1991 (1991-01-01), pages 87 - 95, XP000275596, ISSN: 0019-0578, DOI: 10.1016/0019-0578(91)90012-T

## Description

### TECHNICAL FIELD

The present technology relates to a safety system including a safety controller.

### BACKGROUND ART

Safety controllers and safety systems including the same are being introduced at various manufacturing sites. A safety system is intended to prevent human safety from being threatened by automatically moving devices such as robots. In general, in order to safely use equipment and machinery used in many manufacturing sites, safety systems are often arranged independently of control devices that control the equipment and machinery.

A safety system typically comprises a safety controller that executes a safety program, a detection device that detects whether a person is present, approaches or the like, an input device that receives an emergency operation, an output device that actually stops equipment, machinery and the like, and the like.

Safety systems must employ safety components in accordance with international standards. International standards define various rules and regulations to ensure safety.

For example, Japanese Patent Laying-Open No. 2009-146039 (PTL 1) discloses a safety control system having a safety controller and a programmable controller. In the safety control system disclosed in Patent Literature 1, for the safety controller, an input terminal unit to be in communication with an input device of safety standards, an output terminal unit to be in communication with an output device, and a diagnosis result output terminal unit for externally sending a normal/error signal are disposed. That is, an input signal from the input device of safety standards is directly input to the safety controller via an input circuit.

Further, PTL 2 discloses a function block memory unit which stores a plurality of function blocks by programming each ladder circuit for computing output signals which has to be determined based on input signals from each safety device according to a connection specification of the safety device. The ladder circuit satisfies a predetermined safety standard, and thus, the function blocks satisfying the safety standard are used. The program link unit sequentially links each function block received from the function block memory unit based on the ID number of each I/O module to automatically create the safety program. The corresponding function block can be uniquely determined based on the ID number.

Furthermore, PTL 3 discloses a control device that includes a plurality of communication units that receive data from measurement control devices; a control unit that calculates an operation signal for controlling a controlled device on the basis of the data from the communication units and that outputs the operation signal to the controlled device; a storage unit that stores the data; a first monitoring unit and a second monitoring unit that perform a calculation on the basis of the data to calculate a calculation value, that determine whether the calculation value satisfies a blocking condition, and that output a blocking signal when the calculation value satisfies the blocking condition; and a first blocking unit and a second blocking unit that block the operation signal to the controlled device upon receiving the blocking signal output from at least either one of the first monitoring unit and the second monitoring unit.

### CITATION LIST

### PATENT LITERATURE

PTL 1: Japanese Patent Laying-Open No. 2009-146039
PTL 2: EP 1 744 230 A2
PTL 3: US 2015/073599 A1

### SUMMARY OF INVENTION

### TECHNICAL PROBLEM

The safety control system disclosed in PTL 1 communicates signals with various safety devices via a safety interface (I/F) unit connected to a CPU unit by a system bus.

At an actual manufacturing site, it may be difficult due to spatial constraints, device layout, and the like to dispose a CPU unit with a safety interface (I/F) unit attached thereto. Therefore, there is a need for a configuration that allows more flexible data communication with safety components.

### SOLUTION TO PROBLEM

According to an embodiment of the present invention, a safety system comprises the features of claim 1.

Preferably, the second communication unit and the first communication unit are configured to communicate data in accordance with periods or events independent of each other.

Preferably, the first and second communication units are configured to communicate data with their respective target safety components in accordance with transmission protocols independent of each other.

### ADVANTAGEOUS EFFECTS OF INVENTION

An embodiment of the present invention can provide a configuration that allows more flexible data communications with safety components.

### BRIEF DESCRIPTION OF DRAWINGS

Fig. 1 schematically shows an example in configuration of a safety system according to an embodiment.
Fig. 2 schematically shows an example in configuration of a safety system according to an embodiment.
Fig. 3 schematically shows an example in configuration of a safety system according to an embodiment.
Fig. 4 schematically shows an example in configuration of a safety controller according to an embodiment.
Fig. 5 schematically shows an example of a memory structure in a CPU unit of a safety system according to an embodiment.
Fig. 6 schematically shows an example of a user interface screen for implementing an allocation of an I/O data area in the CPU unit of the safety system according to an embodiment.

### DESCRIPTION OF EMBODIMENTS

The present invention will now be described in embodiments hereinafter in detail with reference to the drawings. Note that in the figures, identical or corresponding components are identically denoted, and accordingly, will not be described repeatedly.

### <A. Example in Configuration of Safety System>

Initially, an example in configuration of a safety system according to the present embodiment will be described. The safety system according to the present embodiment communicates data via one or more transmission lines with a detection device, an input device, and an output device (hereinafter, these devices will also collectively be referred to as "safety components") constituting the safety system.

In the present specification, a "safety component" may include not only the above-described detection device, input device and output device but also any device and apparatus necessary to ensure safety.

As used herein, a "transmission line" means any communication path and communication means for communicating signals or data between devices or units. For the transmission line, any communication medium such as a metal circuit, an optical circuit, and a radio signal can be used. Two or more of these communication media may be combined as desired. Specific transmission lines may include buses and networks. For a bus, for example, a daisy chain system may be adopted. As a network, typically, any fixed cycle network may be adopted. As such a fixed cycle network, a known network may be adopted such as EtherCAT^{®}, EtherNet/IP^{®}, DeviceNet^{®}, CompoNet^{®} or the like.

The safety system according to the present embodiment can communicate data with safety components via a plurality of transmission lines, respectively, and the transmission lines are independent of one another. That is, an event such as an error caused on one of the transmission lines does not have any effect on communication of data on another transmission line. A configuration for implementing such a function will be described later.

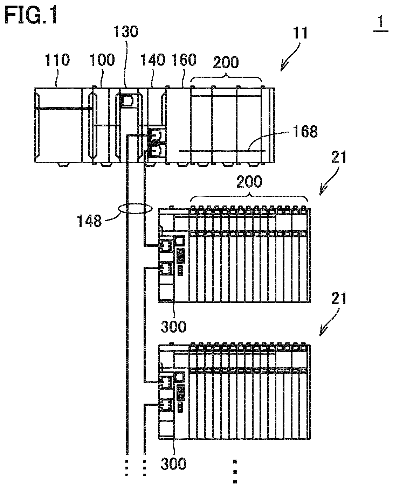

Figs. 1 to 3 schematically show an example in configuration of a safety system according to the present embodiment.

Fig. 1 shows a configuration allowing data communication with safety components via a bus and a field network. Specifically, Fig. 1 shows a safety system 1 comprising a safety controller 11 and one or more remote IO (input/output) devices 21. Safety controller 11 and one or more remote IO devices 21 are connected via a field network 148.

Safety controller 11 includes a central processing unit (CPU) unit 100, a power supply unit 110, a host communication unit 130, a field communication unit 140, a bus master unit 160, and one or more safety IO units 200.

Safety IO unit 200 is an example of a safety component, and collects data from a field referred to in a safety program (i.e., input data), and/or outputs to a field the data calculated by execution of the safety program (i.e., output data). Safety IO unit 200 is an IO unit having a safety-specific function in addition to the function of inputting and outputting a signal. The following description focuses on safety IO unit 200 as a typical example of a safety component. Note, however, that an entirety including various safety switches and safety detectors connected to safety IO unit 200 can also be regarded as a safety component.

CPU unit 100 is a computing device including a processor that executes a safety program. Note that the name "CPU unit" is for convenience, and for example, any implementation that is a computing device capable of executing a safety program by using any processor such as a GPU (graphic processing unit), rather than CPU, can be encompassed.

Power supply unit 110 supplies power having voltage necessary for CPU unit 100 and other units.

Host communication unit 130 manages and controls communication of data with a PLC (programmable controller) or the like. Field communication unit 140 manages and controls data communicated with other devices via field network 148. Bus master unit 160 manages and controls communication of data between CPU unit 100 and safety IO unit 200 via a local bus 168. These units involved in data transmission via transmission lines will be described more specifically hereinafter.

Remote IO device 21 includes a communication coupler unit 300 and one or more safety IO unit 200. Communication coupler unit 300 is connected to CPU unit 100 of safety controller 11 and communication coupler unit 300 of another remote IO device 21 via field network 148.

In the configuration shown in Fig. 1, CPU unit 100 can communicate data with safety IO unit 200 via local bus 168, and communicate data via field network 148 with safety IO unit 200 connected to communication coupler unit 300 of remote IO device 21.

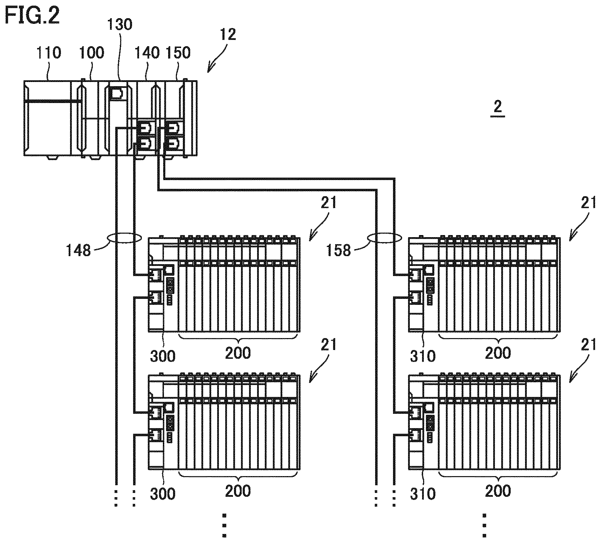

Fig. 2 shows a configuration allowing data communication with safety components via two mutually independent field networks. Specifically, Fig. 2 shows a safety system 2 including a safety controller 12 and a plurality of remote IO devices 21. Safety controller 12 and the plurality of remote IO devices 21 are connected via field networks 148 and 158, respectively.

Safety controller 12 includes CPU unit 100, power supply unit 110, host communication unit 130, field communication units 140 and 150, and one or more safety IO units 200.

CPU unit 100, power supply unit 110, host communication unit 130, and field communication unit 140 are similar to those described for safety controller 11 described above. Field communication unit 150 basically has the same configuration as field communication unit 140, and manages and controls data communicated with another device via field network 158.

Remote IO device 21 is similar to that described for safety controller 11 described above.

In the configuration shown in Fig. 2, CPU unit 100 can communicate data via field network 148 with safety IO unit 200 connected to communication coupler unit 300 of remote IO device 21, and communicate data via field network 158 with safety IO unit 200 connected to communication coupler unit 300 of remote IO device 21.

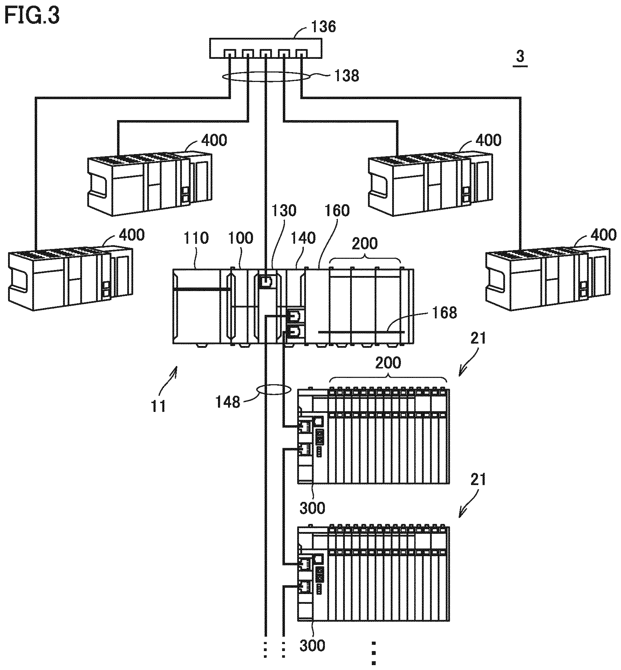

Fig. 3 shows a configuration allowing communication of data with a safety component via a bus and a field network, and communication of data with a PLC or the like via a host network 138. Specifically, Fig. 3 shows a safety system 3 including safety controller 11, one or more remote IO devices 21, one or more PLCs 400s, and a network hub 136. CPU unit 100 and safety IO unit 200 are connected via local bus 168, and safety controller 11 and one or more remote IO devices 21 are connected via field network 148. Furthermore, safety controller 11 and one or more PLCs 400s are connected via host network 138.

Safety controller 11 includes CPU unit 100, power supply unit 110, host communication unit 130, field communication unit 140, and one or more safety IO units 200.

CPU unit 100, power supply unit 110, host communication unit 130, and field communication unit 140 are similar to those described for safety controller 11 described above. Field communication unit 150 basically has the same configuration as field communication unit 140, and manages and controls data communicated with another device via field network 158.

Remote IO device 21 is similar to that described for safety controller 11 described above.

In the configuration shown in Fig. 3, CPU unit 100 can communicate data via field network 148 with safety IO unit 200 connected to communication coupler unit 300 of remote IO device 21, and communicate data via field network 158 with safety IO unit 200 connected to communication coupler unit 300 of remote IO device 21. Furthermore, safety controller 11 can communicate data with one or more PLCs 400s via host network 138.

Safety controller 11 is similar to that described above with reference to Fig. 1. Host communication unit 130 of safety controller 11 is connected to one port of network hub 136. One or more PLCs 400s are connected to other ports of network hub 136. Safety controller 11 and one or more PLCs 400s are thus connected.

In the configuration shown in Fig. 3, CPU unit 100 can communicate data with safety IO unit 200 via local bus 168, and communicate data via field network 148 with safety IO unit 200 connected to communication coupler unit 300 of remote IO device 21. Furthermore, safety controller 11 can communicate data with one or more PLCs 400s via host network 138.

The configurations shown in Figs. 1 to 3 are merely examples, and any configuration can be adopted depending on the application of the safety system. As has been discussed above, the safety system according to the present embodiment can communicate data with a plurality of safety components via a plurality of transmission lines. In doing so, a configuration is adopted to prevent an effect caused on a transmission line from reaching another transmission line. Details will be described hereinafter.

While Figs. 1 to 3 show a CPU unit, a power supply unit, a host communication unit, a field communication unit, and a bus master unit each configured as an independent unit by way of example, some or all of the units may be integrated together or any unit may have a function thereof further separated.

### <B. Example in Configuration of Safety Controller>

Hereinafter, an example in configuration of safety controllers 11 and 12 included in the safety system according to the present embodiment will be described.

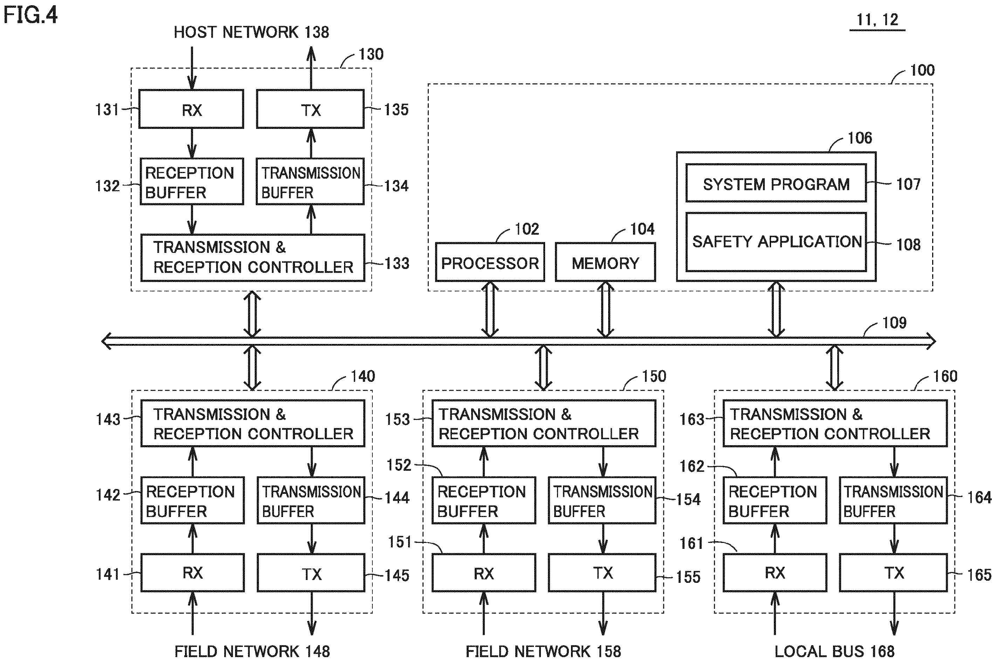

Fig. 4 schematically shows an example in configuration of a safety controller according to the present embodiment. Referring to Fig. 4, safety controllers 11 and 12 include CPU unit 100, host communication unit 130, field communication units 140 and 150, and bus master unit 160. These units are connected via an internal bus 109. Note that safety IO unit 200 is not shown for convenience of explanation. Safety controllers 11, 12 may typically be configured with a PLC serving as a base.

CPU unit 100 includes a processor 102, a memory 104 and a storage 106 as main components.

Processor 102 is connected to memory 104 and storage 106, and reads a system program 107 and a safety program 108 that are stored in storage 106 into memory 104 and executes them to implement various types of processing as will be described hereinafter. Memory 104 is composed of a volatile storage device such as dynamic random access memory (DRAM) or static random access memory (SRAM). Storage 106 is composed of a nonvolatile storage device such as a flash memory or a hard disk. Storage 106 has stored therein system program 107 for controlling CPU unit 100 and units associated therewith, and in addition thereto, safety program 108 designed depending on the target equipment and the like.

Host communication unit 130 provides an interface allowing CPU unit 100 to communicate data with another device (such as PLC 400) via host network 138. Host communication unit 130 includes, as main components, a reception circuit (RX) 131, a reception buffer 132, a transmission and reception controller 133, a transmission buffer 134, and a transmission circuit (TX) 135.

Reception circuit 131 receives a packet transmitted on host network 138, and writes data stored in the received packet to reception buffer 132. Transmission and reception controller 133 sequentially reads received packets written in reception buffer 132, and outputs to processor 102 only read data that is necessary for processing in CPU unit 100. In response to a command received from processor 102, transmission and reception controller 133 sequentially writes to transmission buffer 134 data or packets to be transmitted to another device. In accordance with a timing of transferring a packet on host network 138, transmission circuit 135 sequentially sends out data stored in transmission buffer 134.

Field communication unit 140 provides an interface allowing CPU unit 100 to communicate data with one or more safety IO units 200 via field network 148. Field communication unit 140 includes, as main components, a reception circuit (RX) 141, a reception buffer 142, a transmission and reception controller 143, a transmission buffer 144, and a transmission circuit (TX) 145. These components are functionally, substantially identical or similar to the corresponding components of host communication unit 130, and accordingly, will not be described repeatedly.

Similarly, field communication unit 150 provides an interface allowing CPU unit 100 to communicate data with one or more safety IO units 200 via field network 158. Field communication unit 150 includes, as main components, a reception circuit (RX) 151, a reception buffer 152, a transmission and reception controller 153, a transmission buffer 154, and a transmission circuit (TX) 155. These components are functionally, substantially identical or similar to the corresponding components of field communication unit 140, and accordingly, will not be described repeatedly.

Bus master unit 160 provides an interface for communicating data via local bus 168 with one or more safety IO units 200 attached to CPU unit 100. Bus master unit 160 includes, as main components, a reception circuit (RX) 161, a reception buffer 162, a transmission and reception controller 163, a transmission buffer 164, and a transmission circuit (TX) 165. These components are functionally, substantially identical or similar to the corresponding components of host communication unit 130 or field communication units 140, 150, and accordingly, will not be described repeatedly.

In the following description, host communication unit 130, field communication units 140 and 150, and bus master unit 160 will collectively be referred to as a "communication unit." In the present specification, a "communication unit" means any communication unit responsible for communicating data via a corresponding transmission line. The "communication unit" communicates data with one or more components (typically, safety components) via a corresponding transmission line. Note that internal bus 109 shown in Fig. 4 functions as an interface for connecting processor 102 to one or more communication units.

As shown in Fig. 4, in CPU unit 100 of the safety system according to the present embodiment, each communication unit can communicate uniquely without being affected by other communication units. That is, each communication unit performs processing relating to data communication independently of one another. In order to implement such processing, a memory structure as will be described hereinafter may be employed.

Transmission and reception controllers 133, 143, 153, and 163 in the communication units described above may be implemented by implementation of hardware such as an application specific integrated circuit (ASIC) or a fieldprogrammable gate array (FPGA) or by implementation of a micro processor and firmware or similar software. Alternatively, processor 102 may be responsible for a portion or all of a process that each transmission and reception controller performs.

CPU unit 100 of the safety system may adopt a configuration in which the main components such as processor 102, memory 104, and storage 106 are all or partially duplicated depending on performance required.

### <C. Memory Structure>

Hereinafter, an example of a memory structure in CPU unit 100 of the safety system according to the present embodiment will be described. The safety system according to the present embodiment is such that an event such as an error caused on one of transmission lines does not have any effect on communication of data on another transmission line. In order to implement such a function, in CPU unit 100, independent data areas are allocated to units responsible for communicating data on transmission lines, respectively, and an environment is provided in which a safety program easily accesses to data stored in the respective data areas. That is, in memory 104 of CPU unit 100 of the safety system according to the embodiment, a data area holding data communicated by a communication unit and a data area holding data communicated by another communication unit are arranged independently of each other. Hereinafter, an example of a configuration in which each data area is arranged independently of each other will be described.

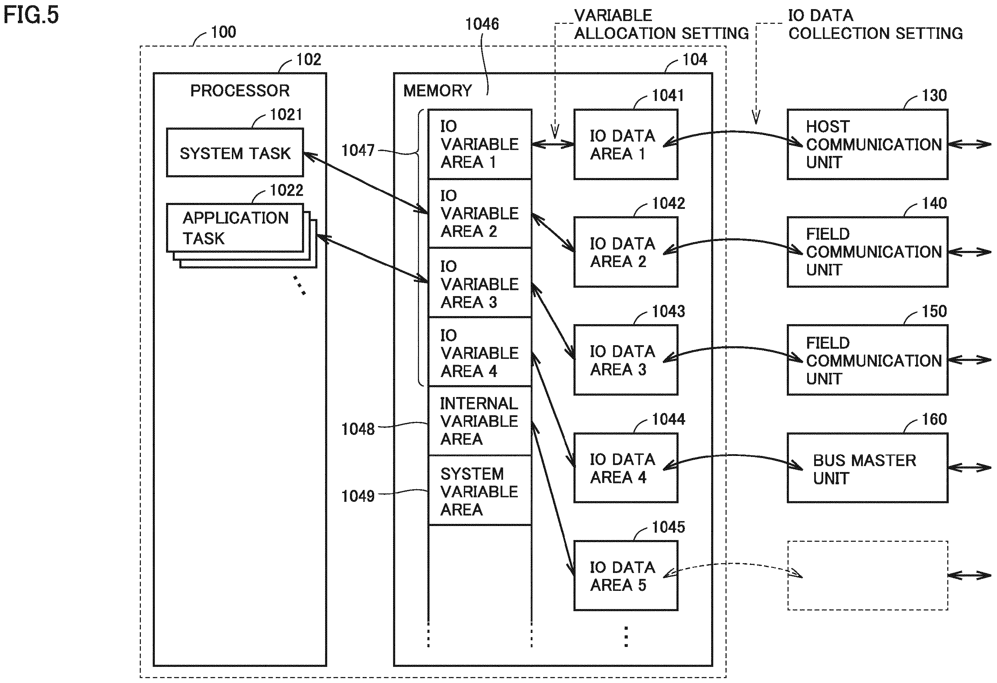

Fig. 5 schematically shows an example of a memory structure in CPU unit 100 of the safety system according to the present embodiment. Fig. 5 shows a configuration in which four communication units (host communication unit 130, field communication units 140 and 150, and bus master unit 160) are attached to CPU unit 100.

Memory 104 of CPU unit 100 is provided with IO data areas 1041 to 1445 allocated to their respective communication units. In IO data areas 1041 to 1445, data received via their respectively associated communication units (input data) and data sent from their respectively associated communication units (output data) are stored and updated as occasion demands. As used herein, "IO data" includes at least one of input data and output data.

In the example shown in Fig. 5, IO data areas 1041, 1042, 1043 and 1044 are allocated to host communication unit 130, field communication unit 140, field communication unit 150, and bus master unit 160, respectively. Note that IO data area 1045 is allocated for reservation.

Such a correspondence between the IO data areas and the communication units is defined by a setting for collecting IO data, and can be set as desired. That is, the IO data areas allocated to the communication units can be set as desired.

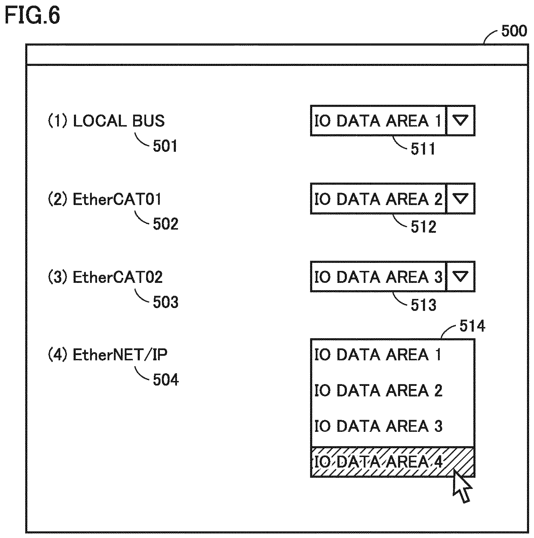

Fig. 6 schematically shows an example of a user interface screen for implementing an allocation of an I/O data area in CPU unit 100 of the safety system according to the present embodiment. Fig. 6 shows a user interface screen 500 provided by a support device (not shown) or the like connected to CPU unit 100. User interface screen 500 is provided with type indications 501 to 504 for communication units connected to CPU unit 100, and selection dialogs 511 to 514 indicating which IO data area is to be allocated to each of type indications 501 to 504.

The user operates each of selection dialogs 511 to 514 to set to which IO data area each communication unit is to be allocated. User interface screen 500 allows a user to easily set an IO data area to be allocated to any communication unit attached to CPU unit 100.

Thus, a correspondence can be made between IO data areas and communication units flexibly in accordance with a setting for collecting IO data, and any type and number of communication units can be attached to CPU unit 100. That is, no matter what communication unit may be adopted as a component of the safety controller, in CPU unit 100 IO data communicated via each communication unit can be accessed without mutually being affected by the communication units.

More specifically, when processor 102 executes system program 107 and safety program 108, one or more system tasks 1021 and one or more application tasks 1022 are repeatedly executed periodically as prescribed or in response to a prescribed event. A work memory area 1046 is formed in memory 104 for these tasks to refer to data.

Work memory area 1046 includes an IO variable area 1047 associated with IO data areas 1041 to 1445, an internal variable area 1048, and a system variable area 1049. Work memory area 1046 arranged in memory 104 corresponds to a memory area to which the safety program executed by processor 102 refers. Work memory area 1046 includes IO variable area 1047 respectively associated with IO data areas 1041 to 1445 allocated to their respectively associated communication units.

IO variable area 1047 is an area for a task executed in processor 102 to refer to or update IO data. IO variable area 1047 is sectioned into IO variable areas 1 to 4, and each sectioned area is managed to synchronize with a corresponding one of the IO data areas 1041 to 1445. The sectioned areas of IO variable area 1047 and IO data areas 1041 to 1445 are defined by a variable allocation setting.

The variable allocation setting defines variable names, variable ranges and the like for referring to data (or values) stored in IO data areas 1041 to 1445. Such a variable name for referring to data may be set, as desired, under a predetermined condition. Note that it is not essential to define a variable for reference, and the addresses of IO data areas 1041 to 1445 may per se be directly designated.

Internal variable area 1048 is an area for holding a variety of types of variables necessary for executing a task in processor 102. For example, in internal variable area 1048, a variable value (or an instance value) or the like necessary for executing a task is stored.

System variable area 1049 is an area for holding values indicating an execution of a task in CPU unit 100, a state of each part of CPU unit 100, and the like. For example, a flag value indicating whether CPU unit 100 is normally operating is stored.

System program 107 and safety program 108 executed in processor 102 refer to a necessary value stored in work memory area 1046, and update the necessary value depending on a result of processing or the like.

Although Fig. 5 shows an exemplary configuration in which a plurality of IO data areas are each independently arranged in common memory 104, separate memories respectively corresponding to the IO data areas may be prepared or separate circuits may be provided for communicating IO data with the communication units.

As described above, the safety system according to the present embodiment provides an IO data area and a corresponding IO variable area prepared for each communication unit so that even when any type and number of communication units are attached, mutually independent processes can be performed. This can prevent a failure or the like caused in any communication unit from affecting another communication unit.

### <D. Management of Communication Processing on Transmission Line>

In the safety system according to the present embodiment, each communication unit (host communication unit 130, field communication units 140 and 150, bus master unit 160, etc.) attached to CPU unit 100 manages communication processing performed on a transmission line. Management of communication processing includes detection of any error that can occur on each transmission line, loss of data transmitted, detection of an error that can occur in a recipient or sender device or unit, and the like.

How periodically or when each communication unit communicates data on the corresponding transmission line can also be independent of the other communication units. That is, a plurality of communication units attached to the same CPU unit 100 can communicate data in accordance with periods or events independent of each other. This is implemented by using dedicated IO data areas 1041 to 1445 previously allocated to the respective communication units.

In doing so, transmission protocols used by the communication units respectively to communicate data via the respective transmission lines can also be determined independently of one another. That is, each communication unit communicates data with a target safety component according to a different transmission protocol.

Meanwhile, performing synchronous processings (or refresh processings) between the work memory area 1046 IO variable area 1047 and IO data areas 1041 to 1445 all together can also reduce temporal offset of IO data in executing safety program 108. As a matter of course, synchronous processings (or refresh processings) between IO variable area 1047 and IO data areas 1041 to 1445 may each be performed as uniquely timed.

From the safety program's viewpoint, as has been described above, what communication path is followed to take input data from the side of a field, that is, from safety IO unit 200, into CPU unit 100, and what communication path is followed to send the output data calculated in CPU unit 100 to safety IO unit 200 are abstracted. Accordingly, whatever transmission line and transmission protocol may be adopted, the same safety program can also be adopted.

That is, the safety system according to the present embodiment can enhance a safety program in versatility and reusability.

In the example of the configuration of the safety system as shown in Figs. 1 to 3 described above, for example, a network according to EtherCAT^{®} can be adopted as field network 148, and a network according to EtherNet/IP^{®} can be adopted as field network 158. These two systems are both Ethernet^{®} based transmission protocols, and allow similar hardware to be adopted. When such different transmission protocols can be supported by a single CPU unit 100, safety IO units which support different communication systems can be used by the same safety controller, which can for example reduce a burden on a cost in introducing a safety system.

While in the embodiment described above an example has been illustrated in which data is communicated between CPU unit 100 and a safety component via a transmission line, a target of communication of data via a transmission line is not necessary be a safety component. For example, a plurality of communication units are connected to the same CPU unit 100, and one communication unit may communicate data with a safety component via the corresponding transmission line, while another communication unit may communicate data with a normal, control component (for example, various operation switches, various detectors, and the like) via the corresponding transmission line. That is, the safety system according to the present embodiment allows data communications via respective transmission lines to be performed independently of one another, and data having different purposes and characteristics may be transmitted on the respective transmission lines.

Thus, according to the present embodiment, a system depending on the equipment of interest can be easily constructed.

### <E. Conclusion>

According to the present embodiment, any type and number of communication units can be attached to CPU unit 100. The number and type of communication units to be attached can be appropriately selected depending on the environment in which the safety system of interest is installed. Such flexibility of communication units allows an approach such as adopting any field bus, as appropriate, to be taken for example when it is necessary to introduce safety IO units exceeding a maximum number of thereof connectable to a local bus extending from the bus master unit. In contrast, in a method for connection by the local bus extending from the bus master unit, when a sufficient installation space can be ensured, a field bus or the like can be dispensed with, and the local bus can alone be used to reduce cost.

Thus, the safety system according to the present embodiment allows a flexible system configuration to be adopted in accordance with constraints on footprint, cost and the like.

Moreover, the safety system according to the present embodiment, allowing one or more communication units to be attached to a CPU unit, allows these communication units to communicate data via their own transmission lines without interfering with one another. Accordingly, when a system configuration including a plurality of communication units and a plurality of transmission lines respectively corresponding thereto or the like is adopted, it can adopt different transmission protocols for them or the same transmission protocol for them. Furthermore, a form of use is also possible in which data communication is performed with a safety component through a communication unit, while data necessary for normal control is communicated through another communication unit.

By adopting such a configuration in which mutually independent communication units can be attached, even if any error occurs in any communication unit or a transmission line connected thereto, data communication with another communication unit is continued, which can enhance the operation rate or working rate of the entire system, including the safety system, and thus contribute to stable operation of equipment.

It should be understood that the presently disclosed embodiments have been described for the purpose of illustration only and in a non-restrictive manner in any respect. The scope of the present invention is defined by the terms of the claims, rather than the above description, and is intended to include any modifications within the meaning and scope equivalent to the terms of the claims.

### REFERENCE SIGNS LIST

1, 2, 3 safety system, 11, 12 safety controller, 21 remote IO device, 100 CPU unit, 102 processor, 104 memory, 106 storage, 107 system program, 108 safety program, 109 internal bus, 110 power supply unit, 130 host communication unit, 131 reception circuit, 132, 142, 152, 162 reception buffer, 133, 143, 153, 163 transmission and reception controller, 134, 144, 154, 164 transmission buffer, 135 transmission circuit, 136 network hub, 138 host network, 140, 150 field communication unit, 148, 158 field network, 160 bus master unit, 168 local bus, 200 IO unit, 300 communication coupler unit, 400 PLC, 1021 system task, 1022 application task, 1041, 1042, 1043, 1044, 1045, 1445 data area, 1046 work memory area, 1047 variable area, 1048 internal variable area, 1049 system variable area.

## Claims

1. A safety system (1, 2, 3) comprising:
a memory (104);
a processor (102) connected to the memory (104) and configured to execute a safety program (108);
a first communication unit (130, 140, 150, 160), connected to the memory (104) via an internal bus (109), configured to communicate data with one or more first safety components (200) via a first transmission line (138, 148, 158, 168); and
a second communication unit (130, 140, 150, 160), connected to the memory (104) via the internal bus (109), configured to communicate data with one or more second safety components (200) via a second transmission line (138, 148, 158, 168), wherein
the second communication unit and the first communication unit (130, 140, 150, 160) are configured to independently of each other perform communication processing via the respective transmission lines (138, 148, 158, 168) in accordance with respective transmission protocols,
the memory (104) includes
a first data area (1041-1045), dedicated to the first communication unit (130, 140, 150, 160), that holds data communicated by the first communication unit (130, 140, 150, 160),
a second data area (1041-1045), dedicated to the second communication unit (130, 140, 150, 160), that holds data communicated by the second communication unit (130, 140, 150, 160) which is arranged independently of the first data area (1041-1045), and
the safety system being **characterized in that**:
the memory further includes a work memory area corresponding to a memory area to which the safety program executed by the processor refers and wherein the work memory area includes an IO variable area including a plurality of memory areas respectively associated with the first data area and the second data area allocated to their respectively associated communication units;
wherein the respectively associated memory areas are configured to be synchronized with its corresponding data area;
the safety system further comprises means for providing a user interface screen configured to receive allocation from a user to set which data area each communication unit is to be allocated.

2. The safety system according to claim 1, wherein the second communication unit and the first communication unit (130, 140, 150, 160) are configured to perform communication processing in accordance with periods or events independent of each other.

3. The safety system according to claim 1 or 2, wherein the first and second communication units (130, 140, 150, 160) are configured to communicate data with their respective target safety components (200) in accordance with the transmission protocols independent of each other.

## Patentansprüche

1. Sicherheitssystem (1, 2, 3), aufweisend:
einen Speicher (104);
einen Prozessor (102), der mit dem Speicher (104) verbunden ist und eingerichtet ist, ein Sicherheitsprogramm (108) auszuführen;
eine erste Kommunikationseinheit (130, 140, 150, 160), die mit dem Speicher (104) über einen internen Bus (109) verbunden ist und eingerichtet ist, Daten an eine oder mehrere erste Sicherheitskomponenten (200) über eine erste Übertragungsleitung (138, 148, 158, 168) zu kommunizieren; und
eine zweite Kommunikationseinheit (130, 140, 150, 160), die mit dem Speicher (104) über den internen Bus (109) verbunden ist und eingerichtet ist, Daten an eine oder mehrere zweite Sicherheitskomponenten (200) über eine zweite Übertragungsleitung (138, 148, 158, 168) zu kommunizieren, wobei
die zweite Kommunikationseinheit und die erste Kommunikationseinheit (130, 140, 150, 160) eingerichtet sind, unabhängig voneinander eine Kommunikationsverarbeitung über die jeweiligen Übertragungsleitungen (138, 148, 158, 168) gemäß jeweiligen Übertragungsprotokollen durchzuführen,
der Speicher (104) Folgendes aufweist:
einen ersten Datenbereich (1041-1045), der der ersten Kommunikationseinheit (130, 140, 150, 160) zugeordnet ist und Daten hält, die von der ersten Kommunikationseinheit (130, 140, 150, 160) kommuniziert werden,
einen zweiten Datenbereich (1041-1045), der der zweiten Kommunikationseinheit (130, 140, 150, 160) zugeordnet ist und Daten hält, die von der zweiten Kommunikationseinheit (130, 140, 150, 160) kommuniziert werden, die unabhängig von dem ersten Datenbereich (1041-1045) angeordnet ist, und
wobei das Sicherheitssystem **dadurch gekennzeichnet ist, dass**:
der Speicher ferner einen Arbeitsspeicherbereich aufweist, der einem Speicherbereich entspricht, auf den sich das von dem Prozessor ausgeführte Sicherheitsprogramm bezieht, und wobei der Arbeitsspeicherbereich einen E/A- bzw. Eingabe/Ausgabe-Variablenbereich aufweist, der mehrere Speicherbereiche aufweist, die jeweils dem ersten Datenbereich und dem zweiten Datenbereich zugeordnet sind, die ihren jeweils zugeordneten Kommunikationseinheiten zugeordnet sind;
wobei die jeweils zugeordneten Speicherbereiche eingerichtet sind, mit ihrem entsprechenden Datenbereich synchronisiert zu werden; und
das Sicherheitssystem ferner Mittel zum Bereitstellen eines Benutzerschnittstellenbildschirms aufweist, der eingerichtet ist, eine Zuordnung von einem Benutzer zu empfangen, um einzustellen, welchem Datenbereich jede Kommunikationseinheit zugeordnet werden soll.

2. Sicherheitssystem nach Anspruch 1, wobei die zweite Kommunikationseinheit und die erste Kommunikationseinheit (130, 140, 150, 160) eingerichtet sind, eine Kommunikationsverarbeitung gemäß Perioden oder Ereignissen unabhängig voneinander durchzuführen.

3. Sicherheitssystem nach Anspruch 1 oder 2, wobei die erste und die zweite Kommunikationseinheit (130, 140, 150, 160) eingerichtet sind, Daten mit ihren jeweiligen Zielsicherheitskomponenten (200) gemäß den Übertragungsprotokollen unabhängig voneinander zu kommunizieren.

## Revendications

1. Système de sécurité (1, 2, 3) comprenant :
une mémoire (104) ;
un processeur (102) connecté à la mémoire (104) et configuré pour exécuter un programme de sécurité (108) ;
une première unité de communication (130, 140, 150, 160), connectée à la mémoire (104) via un bus interne (109), configurée pour communiquer des données avec un ou plusieurs premiers composants de sécurité (200) via une première ligne de transmission (138, 148, 158, 168) ; et
une seconde unité de communication (130, 140, 150, 160), connectée à la mémoire (104) via le bus interne (109), configurée pour communiquer des données avec un ou plusieurs seconds composants de sécurité (200) via une seconde ligne de transmission (138, 148, 158, 168), dans lequel
la seconde unité de communication et la première unité de communication (130, 140, 150, 160) sont configurées pour effectuer indépendamment l'une de l'autre un traitement de communication via les lignes de transmission respectives (138, 148, 158, 168) conformément à des protocoles de transmission respectifs,
la mémoire (104) inclut
une première zone de données (1041-1045), dédiée à la première unité de communication (130, 140, 150, 160), qui contient des données communiquées par la première unité de communication (130, 140, 150, 160),
une seconde zone de données (1041-1045), dédiée à la seconde unité de communication (130, 140, 150, 160), qui contient des données communiquées par la seconde unité de communication (130, 140, 150, 160) qui est agencée indépendamment de la première zone de données (1041-1045), et
le système de sécurité étant **caractérisé en ce que** :
la mémoire inclut en outre une zone de mémoire de travail correspondant à une zone de mémoire à laquelle le programme de sécurité exécuté par le processeur se réfère et dans lequel la zone de mémoire de travail inclut une zone de variable d'E/S incluant une pluralité de zones de mémoire respectivement associées à la première zone de données et à la seconde zone de données attribuées à leurs unités de communication respectivement associées ;
dans lequel les zones de mémoire respectivement associées sont configurées pour être synchronisées avec sa zone de données correspondante ; et
le système de sécurité comprend en outre des moyens pour fournir un écran d'interface utilisateur configuré pour recevoir une attribution à partir d'un utilisateur pour définir quelle zone de données chaque unité de communication doit être attribuée.

2. Système de sécurité selon la revendication 1, dans lequel la seconde unité de communication et la première unité de communication (130, 140, 150, 160) sont configurées pour effectuer un traitement de communication conformément à des périodes ou des événements indépendants les uns des autres.

3. Système de sécurité selon la revendication 1 ou 2, dans lequel les première et seconde unités de communication (130, 140, 150, 160) sont configurées pour communiquer des données avec leurs composants de sécurité cibles respectifs (200) conformément aux protocoles de transmission indépendants les uns des autres.
